# EUROPÄISCHE PATENTSCHRIFT

(11) **EP 3 350 261 B1**
(45) Veröffentlichungstag und Bekanntmachung des Hinweises auf die Patenterteilung: **12.01.2022**
(21) Anmeldenummer: 16763835.2
(22) Anmeldetag: 13.09.2016
(51) Int. Cl.: C08L 23/14, C08L 51/06, C09J 123/14, B32B 7/12, B32B 15/085, B32B 27/12, B32B 27/30, B32B 27/32, B32B 27/34, B32B 27/36, C09J 5/06

(54) **POLYOLEFIN-HEISSSCHMELZKLEBSTOFF MIT NIEDRIGER REAKTIVIERUNGSTEMPERATUR UND HOHER WÄRMESTANDFESTIGKEIT UND DESSEN VERWENDUNG FÜR VAKUUM-TIEFZIEHKASCHIEREN**
POLYOLEFIN HOT MELT ADHESIVE WITH LOW REACTIVATION TEMPERATURE AND HIGH TEMPERATURE RESISTANCE AND ITS USE FOR VACUUM DEEP DRAW LAMINATING
ADHESIFS THERMOFUSIBLES A BASE DE POLYOLEFINE PRESENTANT UNE FAIBLE TEMPERATURE DE REACTIVATION ET UNE HAUTE RESISTANCE AU FLUAGE A CHAUD ET LEUR UTILISATION POUR LAMINAGE PAR EMBOUTISSAGE PROFOND A VIDE

(30) Priorität: 14.09.2015 EP 15185088
(43) Veröffentlichungstag der Anmeldung: 25.07.2018
(73) Patentinhaber: Sika Technology AG, 6340 Baar (CH)
(72) Erfinder: JANKE, Doreen, 25486 Alveslohe (DE); PASCHKOWSKI, Kai, 21635 Jork (DE); CORDES, Mathias, 22525 Hamburg (DE); URBACH, Dirk, 22926 Ahrensburg (DE)
(74) Vertreter: Sika Patent Attorneys
(86) Internationale Anmeldenummer: PCT/EP2016/071489
(87) Internationale Veröffentlichungsnummer: WO 2017/046045

(56) Entgegenhaltungen:
- EP-A1- 1 125 980
- EP-A1- 2 730 626
- WO-A1-02/36704
- WO-A1-2007/142749
- US-A1- 2012 328 805

## Beschreibung

### Technisches Gebiet

Die Erfindung betrifft das Gebiet der Heissschmelzklebstoffe und insbesondere das Gebiet der ataktischen Poly-α-olefin-Heissschmelzklebstoffe.

### Stand der Technik

Heissschmelzklebstoffe sind seit langem bekannt und werden insbesondere als Kaschierklebstoffe eingesetzt. Heissschmelzklebstoffe werden auch als Hotmelts bezeichnet.

Ein Typ von Heissschmelzklebstoffen basiert auf Polyolefinen. Hier handelt es sich insbesondere um Heissschmelzklebstoffe auf Basis von ataktischem Poly-α-olefinen (APAO-Hotmelts). Sie enthalten meist thermoplastische Polyolefin-Co- und Terpolymere, die mit anderen Polymeren und Harzen abgemischt werden. Solche Klebstoffe bauen unmittelbar nach ihrer Applikation durch Abkühlen eine hohe Anfangshaftfestigkeit auf und erhalten ihre Endeigenschaften, insbesondere Wärmestandfestigkeit und Beständigkeit gegenüber Umwelteinflüssen, durch die allmählich ablaufende physikalische Abbindung. APAO-Hotmelts weisen üblicherweise eine gute Haftung zu Polypropylen und Polyethylen auf.

Für das Folienkaschieren im Vakuum-Tiefziehverfahren werden überwiegend Polyurethan (PUR)-Klebstoffe in unterschiedlicher Form verwendet. Die PUR-Klebstoffe werden noch überwiegend in dispergierter oder gelöster Form eingesetzt. Bei diesen Klebstoffsystemen ist aufgrund des hohen Molekulargewichts des PUR das Arbeiten im Kontaktverfahren notwendig. D.h., die Klebstoffe müssen dispergiert oder gelöst in einer Flüssigkeit auf das Trägerteil aufgetragen werden, um eine gute Adhäsion zum Trägerteil aufbauen zu können. Die zu kaschierende Folie ist geprimert. Beim eigentlichen Kaschierprozess wird die Folie erhitzt und auf das Trägerteil mittels Vakuum gepresst. Der auf dem Träger befindliche Klebstoff verbindet sich dann mit dem Primer der Folie.

Nachteilig bei der Verwendung gelöster oder dispergierter Klebstoffe ist das Auftragen des Klebstoffs auf das Trägerteil. Die Trägerteile sind in der Regel dreidimensional verformt. Der Klebstoff muss auf diesen verformten Träger durch Sprühen aufgebracht werden. Dieser Vorgang ist relativ aufwendig. Besonders kritisch ist das anfallende "Overspray".

Um diesen Nachteil zu überwinden wird in jüngster Zeit mehr und mehr versucht, PUR-Klebstoffe in Form von reaktiven Hotmelts für das Folienkaschieren einzusetzen. Bei der Verwendung von Hotmelts ist ein Besprühen des dreidimensional verformten Trägerteils nicht erforderlich. Es reicht aus, den Klebstoff auf die Folie zu bringen. Dieses ist erheblich einfacher, da die Folie zweidimensional ist. Der Klebstoff lässt sich mit verschiedenen Methoden leicht als Film auf die Folie ohne "Overspray", also verlustfrei aufbringen.

Reaktive Polyurethan-Zusammensetzungen, die sich als Heissschmelzklebstoffe einsetzen lassen, sind bekannt (PUR-RHM). Sie bestehen meist aus Isocyanat-terminierten Polyurethan-Prepolymeren, die durch Umsetzung geeigneter Polyole mit einem Überschuss an Diisocyanaten erhalten werden. Solche Klebstoffe bauen unmittelbar nach ihrer Applikation durch Abkühlen eine hohe Anfangshaftfestigkeit auf und erhalten ihre Endeigenschaften, insbesondere Wärmestandfestigkeit und Beständigkeit gegenüber Umwelteinflüssen, durch die allmählich ablaufende "Aushärtung", d.h. die chemische Reaktion der Isocyanatgruppen mit Luftfeuchtigkeit. Der reaktive PUR-RHM weist bei der Verarbeitung ein deutlich geringeres Molekulargewicht auf als die gelösten oder dispergierten PUR-Klebstoffe.

Die heute zum Kaschieren eingesetzten PUR Klebstoffe, ob gelöst, dispergiert oder als Hotmelt verarbeitet, weisen einen gravierenden Nachteil bei der Verwendung von olefinischen Substraten auf. Es ist eine Vorbehandlung der entsprechenden Substrate notwendig, da der polare PUR-Klebstoff ansonsten auf der unpolaren olefinischen Oberfläche nicht haften würde.

Aus diesem Grunde eignen sich Klebstoffe auf Basis amorpher Poly-α-olefine (APAO) besonders für das Kaschieren von olefinischen Untergründen. Trotz dieses enormen Vorteils findet man in der Praxis kaum solche Klebstoffsysteme in der Kaschieranwendung. Grund dafür ist, dass die heute im Markt befindlichen olefinischen Klebstoffe meist nicht geeignet sind für die Vakuum-Tiefziehkaschierung oder enorme Nachteile aufweisen.

Heissschmelzklebstoffe auf Basis von Silan-gepropften Poly-alpha-olefinen sind dem Fachmann zum Beispiel aus DE-A1-4000695 bekannt. Diese Klebstoffe weisen sehr interessante Eigenschaften auf. Die Klebstoffe zeigen eine sehr gute Haftung auf olefinischen Untergründen und weisen nach der Vernetzung einen hohen Wärmestand auf. Reaktive Polyolefinhotmelts sind noch relativ jung verglichen mit allen bisher genannten Klebstofftechnologien und werden deshalb heute zum Kaschieren im Automobilbereich selten verwendet.

Aufgrund der chemischen Basis, der Verarbeitung ohne Trägerflüssigkeit, also als Hotmelt, und der chemischen Nachvernetzung mittels Silanhärtung erscheint diese Technologie besonders geeignet zum Kaschieren von olefinischen Substraten. Heute findet man bereits solche reaktiven APAO Hotmelts in einigen Anwendungen im Fahrzeugbereich. Für eine Vakuum-Presskaschierung ist diese Technologie allerdings noch nicht geeignet, da die reaktiven Klebstoffe durch die Reaktion mit Luftfeuchtigkeit eine relativ kurze Reaktivierungszeit, im Bereich von wenigen Stunden, aufweisen. Für das Vakuum-Kaschieren werden allerdings lange Reaktivierungszeiten benötigt, da die TPO-Folien meist vorbeschichtet und vor der Weiterverarbeitung über Tage bzw. Wochen zwischengelagert werden.

Reaktive Polyolefinhotmelts sind nicht nur aufgrund ihrer Vernetzungsreaktion mit Luftfeuchtigkeit und der damit einhergehenden zu kurzen Reaktivierungszeit nicht für das Vakuum-Tiefziehkaschieren geeignet, sondern auch wegen der zu hohen Reaktivierungstemperatur, die für solche Verfahren ungeeignet ist.

Olefinische Klebstoffe sind verfügbar als gelöste Systeme, doch besteht allgemein in der Industrie der Wunsch, von der Verarbeitung lösungsmittelhaltiger Klebstoffe abzusehen. Außerdem sind die Lösungsmittel, die zum Lösen eines unpolaren, olefinischen Klebstoffs geeignet sind, besonders kritisch in der Verwendung.

Hotmelts auf olefinischer Basis sind dagegen sehr verbreitet in der Verwendung, auch in der Automobilindustrie. Sie werden jedoch meist als thermoplastische Klebstoffe nicht für die Kaschierung dreidimensional verformter Trägerteile eingesetzt. Ohne chemische Aushärtung zumindest zum Elastomer ist der Klebstoff nicht ausreichend in seiner Kohäsion in der Wärme, um auf Dauer die Verklebung zu erhalten. Überdies sind APAOs mit hohem Wärmestand auch bedingt durch den hohen Erweichungspunkt nicht für das Vakuum-Tiefziehen geeignet, da die eingebrachte Temperatur beim Aktivieren nicht ausreicht. APAO-Hotmelts haben allerdings den Vorteil, dass sie für Folienvorbeschichtungen besonders geeignet sind. Der Klebstoff kann in einem gesonderten Beschichtungsschritt auf die Folie, z.B. eine TPO-Folie, appliziert werden. Bis zur weiteren Verarbeitung im Kaschierprozess können diese vorbeschichteten Rollen selbst über Monate zwischengelagert werden.

Weiche APAO-Hotmelts sind grundsätzlich gut geeignet für die Kaschierung von TPO-Folien im Vakuumpresskaschierverfahren, jedoch weisen sie direkt nach der Kaschierung eine zu starke Haftung zum Werkzeug auf bzw. einen zu geringen Wärmestand. Die Adhäsion des APAO ist zu stark zur Oberfläche des Kaschierwerkzeugs und die Wärmebeständigkeit des Verbundes ist für Automotive Anwendungen zu gering. Das macht den Einsatz in der Praxis unmöglich. Die leistungsstärkeren APAO-Hotmelts benötigen eine zu hohe Reaktivierungstemperatur. Aus diesem Grunde sind solche Hotmelts für die Kaschierung in der Praxis nicht geeignet.

Neben der Haftung auf unpolaren Substraten ist auch die Haftung auf polaren Substraten interessant. Generell kleben APAO-Hotmelts auch auf Substraten aus Acrylnitril-Butadien-Styrol (ABS). Eine gute Benetzung des Klebstoffes wird beim Applizieren des Klebstoffes durch das Einbringen von hoher Temperatur gewährleistet. Beim Applizieren von Raupen wird die notwendige höhere Temperatur mit ins System eingebracht. Im Gegensatz zu Montageverklebungen wird beim Kaschieren von Folien (z.B. TPO-Folie) auf ABS lediglich mit sehr dünnen Klebstoffschichtdicken gearbeitet. Der auf dem flexiblen Substrat (z.B. TPO-Folie) aufgetragene Klebstoff wird vor dem Verkleben reaktiviert, was zum Erweichen und Anschmelzen des Klebstoffes führt. Beim eigentlichen Benetzen des aktivierten Klebstoffes auf der Substratoberfläche (z.B. ABS) erreicht man lediglich Temperaturen zwischen 50 und 70°C.

Unter diesen Bedingungen ist ein Kaschieren selbst mit gut haftenden Schmelzkleber-Produkten nicht mehr möglich, da die eingebrachte Wärme nicht ausreicht, um den Klebstoff genügend aufzuschmelzen bzw. zu erweichen. Theoretisch funktionieren sehr weichen APAO-Hotmelts sehr gut, da sie bei den niedrigen Temperaturen sehr gut auf der Substratoberfläche benetzen. Diese Klebstoffe haben allerdings den Nachteil, dass sie einen zu geringen Wärmestand besitzen und für anspruchsvolle Kaschierungen nicht genutzt werden können.

Beim sogenannten IMG-Kaschieren werden noch niedrigere Temperaturen beim Benetzen der Substratoberfläche erreicht, so dass die Anforderungen an den Schmelzkleber noch größer sind.

WO 2007/142749 A1 betrifft einen Heissschmelzkleber zum Binden von Polypropylen-Gewebe, wobei der Kleber ein amorphes Poly-alpha-Olefin, ein amorphes Propylen-Buten-Copolymer, gepfropftes Polyethylen und ein Wachs enthält. Als gepfropftes Polyethylen kann Maleinsäureanhydrid-gepfropftes Polyethylen eingesetzt werden.

EP 1125980 A1 beschreibt einen Heissschmelzkleber zur Herstellung von wasserdampf-undurchlässigem Papier. In den Beispielen werden amorphe Poly-alpha-Olefine, Kohlenwasserstoffharze und ein Maleinsäureanhydridmodifiziertes Polypropylen zur Herstellung verwendet.

WO 02/36704 A1 beschreibt einen Klebstoff zum Binden von Polypropylen-Gewebe, wobei der Kleber ein amorphes Poly-alpha-Olefin, gepfropftes Polypropylen und einen Klebrigmacher enthält. In den Beispielen wird Maleinsäureanhydrid-gepfropftes Polypropylen eingesetzt.

US 2012/328805 A1 beschreibt einen Schmelzklebstoff und seine Verwendung zur Herstellung von Verpackungen. Zur Herstellung des Klebers werden in den Beispielen z.B. amorphes Poly-alpha-Olefin, Polyethylen-Wachs und Maleinsäureanhydrid-gepfropftes Polypropylen eingesetzt.

EP 2730626 A1 beschreibt einen reaktiven Schmelzklebstoff und seine Verwendung zur Herstellung von Verbundkörpern im Tiefziehverfahren. In den Beispielen werden z.B. Silan-modifiziertes amorphes Poly-alpha-Olefin, unmodifiziertes amorphes Poly-alpha-Olefin, Paraffinwachs mit einem Tropfpunkt im Bereich von 108-124°C und Maleinsäureanhydrid-gepfropftes Polypropylen mit einem Erweichungspunkt von ca. 140°C verwendet.

### Darstellung der Erfindung

Die Aufgabe der vorliegenden Erfindung ist es daher, Heissschmelzklebstoffe zur Verfügung zu stellen, welche die vorstehend genannten Nachteile des Standes der Technik überwinden. Insbesondere soll ein Heissschmelzklebstoff bereitgestellt werden, der eine niedrige Reaktivierungstemperatur bei hohem Wärmestand aufweist und auch eine gute Haftung zu polaren Substraten, insbesondere ABS, zeigt. Der Heissschmelzklebstoff soll insbesondere für das Vakuum-Tiefziehkaschieren geeignet sein. Auch ein Einsatz beim IMG-Kaschieren sollte möglich sein.

Überraschenderweise hat sich gezeigt, dass ein Heissschmelzklebstoff auf Basis von ataktischen Poly-α-olefinen mit einer geeigneten Auswahl an Zusatzkomponenten in der Lage ist, diese Aufgabe zu lösen.

Die Erfindung betrifft daher eine Heissschmelzklebstoffzusammensetzung wie in Anspruch 1 definiert.

Die erfindungsgemäße Heissschmelzklebstoffzusammensetzung zeichnet sich dadurch aus, dass sie eine niedrige Reaktivierungstemperatur bei hohem Wärmestand und gute Haftung zu ABS aufweist und daher sehr gut für das Vakuum-Tiefziehkaschieren geeignet ist. Die erfindungsgemäße Zusammensetzung ist auch besonders für das IMG-Kaschieren geeignet.

Die Heissschmelzklebstoffzusammensetzungen verfügen über ein breites Haftspektrum und haften gut auf niederenergetischen Oberflächen wie Polyolefinfolien, insbesondere Polyethylenfolien, z.B. TPO-Folien.

Weitere Aspekte der vorliegenden Erfindung sind die Verwendung der Heissschmelzklebstoffzusammensetzung zum Folienkaschieren, ein Verfahren zur Herstellung eines Verbundkörpers durch Verkleben mit der Heissschmelzklebstoffzusammensetzung und der so hergestellte Verbundkörper. Bevorzugte Ausführungsformen der Erfindung sind Gegenstand der Unteransprüche.

### Wege zur Ausführung der Erfindung

Als Erweichungspunkt wird im vorliegenden Dokument jeweils der Erweichungspunkt verstanden, welcher nach der Ring & Kugel-Methode gemäss DIN EN 1238 gemessen wurde, sofern nicht anders angegeben. Unter Molekulargewicht versteht man im vorliegenden Dokument das Zahlenmittel des Molekulargewichts (Mn). Das Molekulargewicht kann bestimmt werden durch Gelpermeationschromatographie (GPC) mit Styrol als Standard.

Die Mengenangaben beziehen sich immer auf das Gesamtgewicht der Heissschmelzklebstoffzusammensetzung, sofern nicht anders angegeben.

Folgende Abkürzungen werden verwendet:
ABS Acrylnitril-Butadien-Styrol
APAO ataktisches Poly-α-olefin, wird auch als amorphes Poly-α-olefin bezeichnet
KW Kohlenwasserstoff
TPO thermoplastisches Elastomer auf Olefinbasis

Die Ausdrücke "Heissschmelzklebstoffzusammensetzung", "Heissschmelzklebstoff" und "Heissschmelzkleber" werden im Folgenden als synonyme Ausdrücke verwendet.

In einem ersten Aspekt betrifft die vorliegende Erfindung eine Heissschmelzklebstoffzusammensetzung, welche umfasst
a) mindestens ein bei 25°C festes ataktisches Poly-α-olefin (APAO);
b) mindestens ein Kohlenwasserstoffharz mit einem Erweichungspunkt von mindestens 80°C, gemessen nach der Ring & Kugel-Methode gemäss DIN EN 1238; und
c) mindestens ein Maleinsäureanhydrid-gepfropftes Wachs mit einem Erweichungspunkt von nicht mehr als 150°C, gemessen nach der Ring & Kugel-Methode gemäss DIN EN 1238, welches ein Maleinsäureanhydrid-gepfropftes Polypropylen-Wachs oder ein Maleinsäureanhydrid-gepfropftes Polyethylen-Wachs ist,
wobei der Anteil an dem mindestens einen Maleinsäureanhydrid-gepfropften Wachs mindestens 3 Gew.-% beträgt und wobei der Anteil an dem mindestens einen Kohlenwasserstoffharz 10 bis 20 Gew.-% beträgt.

Bei der erfindungsgemäßen Zusammensetzung handelt es sich insbesondere um einen nichtreaktiven Polyolefin-Heissschmelzklebstoff, insbesondere einen nichtreaktiven Poly-α-olefin-Heissschmelzklebstoff, d.h. das APAO in der Heissschmelzklebstoffzusammensetzung weist keine reaktiven Gruppen auf, über die eine chemische Vernetzung möglich wäre, wie z.B. Silangruppen. So enthält die Heissschmelzklebstoffzusammensetzung z.B. insbesondere kein Silangruppen enthaltendes APAO.

Das bei 25°C feste ataktische Poly-α-olefin ist insbesondere thermoplastisch. Die APAOs können Homopolymere oder Copolymere sein. Die Copolymere können z.B. Polymere aus zwei, drei oder mehr Olefin-Monomeren sein.

Ataktische Poly-α-olefine lassen sich durch Polymerisation von α-Olefinen, insbesondere von Ethen, Propen und 1-Buten, z.B. mit Ziegler-Katalysatoren herstellen. Die APAOs können Homopolymere oder Copolymere von α-Olefinen sein. Sie weisen gegenüber anderen Polyolefinen eine amorphe Struktur auf.

Unter einem α-Olefin wird in diesem Dokument in üblicher Definition ein Alken der Summenformel CₓH₂ₓ verstanden, welches eine C-C-Doppelbindung am ersten Kohlenstoffatom (a-Kohlenstoff) aufweist. Der Index x entspricht der Anzahl Kohlenstoffatome, wobei x z.B. im Bereich von 2 bis 15, bevorzugt 2 bis 8, besonders bevorzugt 2 bis 4 liegt. Beispiele für α-Olefine sind Ethylen, Propylen, 1-Buten, 1-Penten, 1-Hexen, 1-Hepten und 1-Octen. Somit stellen z.B. weder 1,3-Butadien noch 2-Buten oder Styrol α-Olefine dar.

Das mindestens eine APAO weist z.B. einen Erweichungspunkt im Bereich von 70°C bis 170°C, bevorzugt von 80°C bis 150°C und bevorzugter von 90°C bis 140°C auf.

Das mindestens eine APAO weist bevorzugt ein Molekulargewicht Mn im Bereich von 6'000 und 25'000 g/mol auf.

Es können ein oder mehre APAOs, verwendet werden. Es können z.B. zwei APAOs in dem Heissschmelzklebstoff verwendet werden, vorteilhafter Weise in einem Gewichtsverhältnis von erstem APAO zu zweitem APAO im Bereich von 60:40 bis 40:60.

Geeignete thermoplastische APAOs sind im Handel erhältlich, z.B. Vestoplast^{®}703 und Vestoplast^{®}792 von Evonik.

Die Heissschmelzklebstoffzusammensetzung umfasst z.B. 40 bis 85 Gew.-%, bevorzugt 60 bis 80 Gew.-%, von dem mindestens einen APAO.

Die Heissschmelzklebstoffzusammensetzung enthält weiterhin mindestens ein Kohlenwasserstoffharz mit einem Erweichungspunkt von mindestens 80°C, bevorzugt mindestens 90°C und bevorzugter mindestens 100°C. Das mindestens eine Kohlenwasserstoffharz, weist z.B. einen Erweichungspunkt im Bereich von 80°C bis 150°C, bevorzugt von 90°C bis 140°C oder von 100°C bis 130°C, auf. Das Kohlenwasserstoffharz ist insbesondere ein bei 25°C festes Kohlenwasserstoffharz. Solche Harze werden auch als Festharze bezeichnet.

Es können ein oder mehrere Kohlenwasserstoffharze verwendet werden. Das Kohlenwasserstoffharz kann z.B. ein Petroleumharz, ein Kohlenteerharz oder ein Polyterpenharz sein, die jeweils gegebenenfalls modifiziert sein können.

Das Kohlenwasserstoffharz kann z.B. ein aliphatisches, aromatisches oder cyclisches Kohlenwasserstoffharz sein. Es kann auch ein modifiziertes Kohlenwasserstoffharz sein, z.B. ein teilweise oder vollständig hydriertes aromatisches Kohlenwasserstoffharz oder ein aromatisch modifiziertes Kohlenwasserstoffharz, wobei ein aliphatisches Kohlenwasserstoffharz bevorzugt ist.

Das Kohlenwasserstoffharz ist bevorzugt ein C5-C9-Kohlenwasserstoffharz, besonders bevorzugt ein aliphatisches C5-C9-Kohlenwasserstoffharz.

Geeignete Kohlenwasserstoffharze sind im Handel erhältlich, z.B. Hikorez^{®}A-2115, Hikorez^{®}A-1100 und Sukorez^{®}SU-400, alle von Kolon Industries, Inc, Korea, Regalite^{®}R 7100 von Eastman Chemical Co., USA, Escorez^{®}1401 von Exxon Mobil, USA, sowie Wingtack^{®}extra und Wingtack^{®}86 jeweils von Cray Valley USA, insbesondere eine Mischung davon, z.B. in einem Verhältnis von Wingtack^{®}extra zu Wingtack^{®}86 von ca. 60 Gew% zu ca. 40 Gew%. Aliphatische Kohlenwasserstoffharze wie Hikorez^{®}A-2115 sind besonders bevorzugt. Das Kohlenwasserstoffharz verleiht dem Klebstoff beim Erwärmen Klebrigkeit.

Die Heissschmelzklebstoffzusammensetzung umfasst 10 bis 20 Gew.-%, von dem mindestens einen Kohlenwasserstoffharz. Mengen im Bereich von ca. 13 bis 18 Gew.-% haben sich als besonders bevorzugt erwiesen.

Die Heissschmelzklebstoffzusammensetzung enthält weiterhin ein oder mehrere Maleinsäureanhydrid-gepfropfte Wachse mit einem Erweichungspunkt von nicht mehr als 150°C, welches ein Maleinsäureanhydrid-gepfropftes Polypropylen-Wachs oder ein Maleinsäureanhydrid-gepfropftes Polyethylen-Wachs ist, wobei der Anteil an dem mindestens einen Maleinsäureanhydrid-gepfropften Wachs in der Heissschmelzklebstoffzusammensetzung mindestens 3 Gew.-% beträgt. Der Anteil an dem mindestens einen Maleinsäureanhydrid-gepfropften Wachs in der Heissschmelzklebstoffzusammensetzung beträgt bevorzugt mindestens 4 Gew.-%, bevorzugter mindestens 5 Gew.-% und besonders bevorzugt mindestens 7 Gew.-%.

Das mindestens eine Maleinsäureanhydrid-gepfropfte Wachs weist vorzugsweise einen Erweichungspunkt im Bereich 100°C bis 150°C, bevorzugt von 120°C bis 150°C, auf.

Das Maleinsäureanhydrid-gepfropfte Wachs ist ein polar modifiziertes Polyolefinwachs. Besonders bevorzugt handelt es sich bei dem Maleinsäureanhydrid gepfropften Wachs um ein Maleinsäureanhydrid gepfropftes Polypropylen-Wachs.

Das Maleinsäureanhydrid-gepfropfte Wachs kann z.B. durch Aufpfropfung von Maleinsäureanhydrid auf ein Polyolefinwachs ausgewählt aus einem Polypropylen-Wachs oder einem Polyethylen-Wachs gebildet werden. Bei dem Polypropylen-Wachs kann es sich um ein Homopolymer von Propylen oder ein Copolymer von Propylen handeln. Bei dem Polyethylen-Wachs kann es sich um ein Homopolymer von Ethylen oder ein Copolymer von Ethylen handeln. Das oder die Comonomere für das Copolymer von Propylen können z.B. mindestens ein Monomer ausgewählt aus Ethylen und Olefinen, insbesondere 1-Olefinen, mit mindestens 4 C-Atomen, z.B. 4 bis 12 C-Atomen, sein. Das oder die Comonomere für das Copolymer von Ethylen können z.B. mindestens ein Monomer ausgewählt aus Propylen und Olefinen, insbesondere 1-Olefinen, mit mindestens 4 C-Atomen, z.B. 4 bis 12 C-Atomen, sein.

Geeignete Polyolefinwachse als Grundlage zur Herstellung der Maleinsäureanhydrid-gepfropften Wachse können durch thermischen Abbau verzweigter oder unverzweigter Polyolefin-Kunststoffe oder durch direkte Polymerisation von Olefinen hergestellt werden. Als Polymerisationsverfahren kommen z.B. radikalische Verfahren in Frage, wobei das Ethylen oder Propylen, bei hohen Drucken und Temperaturen zu mehr oder minder verzweigten Wachsen umgesetzt werden; daneben gibt es Verfahren, bei denen Ethylen und/oder höhere 1-Olefine wie Propylen mit Hilfe metallorganischer Katalysatoren, beispielsweise Ziegler-Natta- oder Metallocenkatalysatoren zu unverzweigten oder verzweigten Wachsen polymerisiert werden. Bevorzugt sind Polypropylen-Wachse oder Polyethylen-Wachse, die durch Ziegler- oder Metallocene-Katalyse hergestellt werden.

Der Pfropfungsgrad des Maleinsäureanhydrid-gepfropfte Wachs ist z.B. mindestens 1 Gew.-%, bevorzugt mindestens 2 Gew.-% und insbesondere mindestens 3 Gew.-%, Maleinsäureanhydrid, bezogen auf das Gewicht des unmodifizierten Wachses. Vorzugsweise liegt dieser Pfropfungsgrad im Bereich von 1 bis 15 Gew.-%, bevorzugt von 3 bis 15 Gew.-%, meist bevorzugt von 4 bis 12 Gew.-%.

Das Maleinsäureanhydrid-gepfropfte Wachs weist z.B. eine Schmelzviskosität bei 170°C im Bereich von 10 bis 10'000 mPa•s, insbesondere 400 bis 3000 mPa•s, auf.

Die Heissschmelzklebstoffzusammensetzung umfasst z.B. 3 bis 20 Gew.-%, bevorzugt 4 bis 18 Gew.-%, bevorzugter 5 bis 15 Gew.-%, von dem mindestens einen Maleinsäureanhydrid-gepfropften Wachs. Mengen im Bereich von ca. 7 bis 13 Gew.-% haben sich als besonders bevorzugt erwiesen. Das Maleinsäureanhydrid-gepfropfte Wachs verbessert die Hafteigenschaften des Heissschmelzklebstoffs.

Geeignete Maleinsäureanhydrid-gepfropfte Wachse sind im Handel erhältlich, z.B. Licocene^{®}PP MA 6452 von Clariant, ein Maleinsäureanhydrid-gepfropftes Polypropylen mit einem Maleinsäureanhydrid-Anteil von 7 Gew.-%.

Die Heissschmelzklebstoffzusammensetzung kann gegebenenfalls weitere Bestandteile enthalten, wie sie für Heissschmelzkleber üblich sind, z.B. mindestens ein Öl, mindestens ein weiteres thermoplastisches Polymer und/oder mindestens ein Additiv.

Bei dem Öl kann es sich um jedes Öl handeln, welches für Heissschmelzkleber üblich ist. Der Einsatz von Ölen bringt jedoch Nachteile bei der Adhäsion. Der Heissschmelzklebstoff enthält daher bevorzugt kein Öl.

Optional enthält die Heissschmelzklebstoffzusammensetzung ein oder mehrere weitere thermoplastische Polymere, vorzugsweise nicht reaktive thermoplastische Polymere. Unter einem weiteren thermoplastischen Polymer werden hier thermoplastische Polymere verstanden, die sich von den ataktischen Poly-α-olefinen, Kohlenwasserstoffharzen und Maleinsäureanhydrid-gepfropften Wachsen wie vorstehend definiert unterscheiden.

Beispiele für ein weiteres thermoplastisches Polymer sind Homo- oder Copolymere von ungesättigten Monomeren, insbesondere aus der Gruppe umfassend Ethylen, Propylen, Butylen, Isobutylen, Isopren, Vinylacetat, höheren Ester davon und (Meth)acrylat. Besonders geeignet sind Ethylenvinylacetat-Copolymer (EVA), Polypropylen (PP) und Polyethylen (PE) als Homopolymere.

Der Anteil an diesen weiteren thermoplastischen Polymeren, falls überhaupt verwendet, sollte nicht zu groß sein, z.B. weniger als 5 Gew.-%, bevorzugt weniger als 2 Gew.-%, bevorzugt weniger als 1 Gew.-%, bezogen auf das Gewicht der Heissschmelzklebstoffzusammensetzung. Insbesondere sollte der Anteil an Polypropylen, falls verwendet, weniger als 2 Gew.-%, bevorzugt weniger als 1 Gew.-%, bezogen auf das Gewicht des Heissschmelzklebstoffs, betragen. In einer bevorzugten Ausführungsform enthält die Heissschmelzklebstoffzusammensetzung im wesentlichen keine weiteren thermoplastischen Polymere, d.h. weniger als 0,5 Gew.-%, bevorzugt weniger als 0,1 Gew.-%.

Die Heissschmelzklebstoffzusammensetzung kann gegebenenfalls ein oder mehrere Additive enthalten, z.B. ausgewählt aus Füllstoffen, Weichmachern, Haftvermittlern, UV-Absorptionsmitteln, UV-Stabilisatoren, Antioxidationsmitteln, Wärmestabilisatoren, optische Aufhellern, Fungiziden, Pigmenten, Farbstoffen und Trocknungsmitteln.

Das Gesamtgewicht der Komponenten a), b) und c), d.h. die bei 25°C festen ataktischen Poly-α-olefine; die Kohlenwasserstoffharze mit einem Erweichungspunkt von mindestens 80°C und die Maleinsäureanhydrid-gepfropften Wachs mit einem Erweichungspunkt von nicht mehr als 150°C wie vorstehend definiert, bezogen auf das Gewicht der Heissschmelzklebstoffzusammensetzung, ist bevorzugt mindestens 60 Gew.-%, bevorzugter mindestens 80 Gew.-%, noch mehr bevorzugt 95 Gew.-% und besonders bevorzugt mindestens 98 Gew.-%.

Die Herstellung der Heissschmelzklebstoffzusammensetzung kann durch Mischen der Komponenten auf übliche, dem Fachmann für Heissschmelzklebstoffe bekannte Art und Weise erfolgen.

Die erfindungsgemäße Heissschmelzklebstoffzusammensetzung weist bevorzugt einen Schmelz- oder Erweichungspunkt im Bereich von 100 bis 160°C, insbesondere von 110 bis 140°C, auf.

Die erfindungsgemäße Heissschmelzklebstoffzusammensetzung ist lagerstabil und unter den üblichen Applikationsbedingungen, insbesondere im Temperaturbereich von 100 bis 200°C, gut verarbeitbar und während ausreichend langer Zeit viskositätsstabil, auch bei der Applikation über offene Walzen. Nach dem Abbinden bzw. der Kristallisation verfügt sie über eine relativ hohe Endfestigkeit und Wärmestandfestigkeit sowie eine gute Beständigkeit gegenüber Umwelteinflüssen.

Insbesondere weist der erfindungsgemäße Heissschmelzklebstoff eine niedrige Reaktivierungstemperatur bei einem hohen Wärmestand auf. Der applizierte Klebstoff weist eine geringe Haftung zu den Kaschierwerkzeugoberflächen auf.

Die erfindungsgemäße Heissschmelzklebstoffzusammensetzung eignet sich für alle Verklebungen, die mit Heissschmelzklebstoffen durchgeführt werden können. Die erfindungsgemäße Heissschmelzklebstoffzusammensetzung eignet sich insbesondere als Klebstoff für die Folienkaschierung, bevorzugt durch Vakuum-Tiefziehkaschierung oder IMG-Kaschierung.

Bei der Vakuum-Tiefziehkaschierung wird ein Klebstoff, in diesem Fall die erfindungsgemäße Heissschmelzklebstoffzusammensetzung, zunächst auf eine Seite einer Folie, z.B. einer TPO-Folie, aufgebracht. Dies kann z.B. die Rückseite einer Dekorfolie sein. Anschließend erfolgt die eigentliche Tiefziehkaschierung. Die Folie mit dem darauf aufgebrachten Klebstoff wird erwärmt und mittels Vakuum auf ein Trägerteil, z.B. basierend auf PP, harzgebundenen Naturfasern oder ABS, gezogen. Dabei kommt der geschmolzene Heissschmelzklebstoff in Kontakt mit dem zu kaschierenden Trägerteil. Dies erfolgt gewöhnlich durch Anlegen eines Vakuums an das mit Löchern versehene Trägerteil auf der Seite des Trägerteils, die der zu kaschierende Seite gegenüberliegt.

Bei der IMG-Kaschierung ("In Mold Graining"-Kaschierung) handelt es sich um einen Spezialfall der Vakuum-Tiefziehkaschierung, bei dem während des beschriebenen Kaschierprozesses die glatte Folie auch ihre typische Narbung erhält, wobei es sich bei der glatten Folie bevorzugt um eine glatte TPO-Folie handelt. Dazu wird die glatte Folie bis auf ca. 220°C aufgeheizt. Bei dieser Temperatur ist die Folie dehnbar und es ist möglich, sie mit der entsprechenden Narbung zu versehen. Der erste Schritt beim IMG-Prozess ist es die Folie, insbesondere TPO-Folie, mit der Narbung zu versehen. Im 2.Schritt wird mittels Vakuum die aufgeheizte und mit dem Klebstoff vorbeschichtete Folie auf das feste Substrat gepresst.

Die erfindungsgemäße Heissschmelzklebstoffzusammensetzung eignet sich bevorzugt für den Fahrzeugbau, insbesondere für den Automobilbau, z.B. als Klebstoff bei der Kaschierung von Folien, wie z.B. TPO-Folien, auf unpolaren Materialien, wie z.B. Polypropylen- oder Naturfaserträgermaterialien, oder polaren Substraten wie z.B. ABS.

Die nachstehenden Ausführungen zum erfindungsgemäßen Verfahren der Folienkaschierung gelten naturgemäß auch im besonderen Maße für die vorstehend genannten Verwendungen und umgekehrt.

Ein weiterer Aspekt der Erfindung betrifft ein Verfahren zur Herstellung eines Verbundkörpers aus einem Trägerelement und einer Folie durch Verkleben,
wobei das Verfahren folgende Schritte umfasst
a) das Applizieren einer erfindungsgemäßen Heissschmelzklebstoffzusammensetzung auf eine Seite einer Folie, vorzugsweise einer Polyolefin-Folie;
b) das Erwärmen der mit der Heissschmelzklebstoffzusammensetzung beschichteten Folie zur Reaktivierung, und
c) das Aufziehen der reaktivierten, mit der Heissschmelzklebstoffzusammensetzung beschichteten Folie auf das Trägerelement, wobei die Heissschmelzklebstoffzusammensetzung mit dem Trägerelement in Kontakt kommt und nach Abkühlung den Klebverbund herstellt.

Die Folie ist bevorzugt eine Dekorfolie. Die Folie ist bevorzugt eine Polyolefin-Folie und insbesondere eine TPO-Folie, also eine Folie auf Basis von einem thermoplastischen Elastomer auf Olefinbasis. Derartige Folien sind in großer Vielfalt im Handel erhältlich.

Die Folie, insbesondere die Polyolefinfolie bzw. TPO-Folie, kann z.B. eine Dicke von 0,05 mm bis 5 mm, bevorzugt 0,05 bis 1 mm, aufweisen. Sie können einschichtig oder mehrschichtig aufgebaut sein. Es ist dem Fachmann klar, dass Folien neben dem Kunststoffbasismaterial auch noch andere Zusatzstoffe und Verarbeitungsmittel, wie weitere Polymere oder Additive, enthalten können.

Das Trägerelement ist vorzugsweise ein dreidimensional geformter Körper. Das Material des Trägerelements oder die zu kaschierende Oberfläche des Trägermaterials kann jedes beliebige Material sein, z.B. aus Kunststoff, insbesondere Polyolefinen oder ABS, Metall, lackiertem Metall, Holz, Holzwerkstoffen oder natürlichen oder synthetischen Fasermaterialien.

Beispiele für Kunststoffmaterialien sind Materialien aus Polyethylen wie Polyethylen mit hoher Dichte (HDPE), Polyethylenterephthalat (PET), Polystyrol (PS), Polypropylen (PP) einschließlich glasfaserverstärktem PP, Polyvinylchlorid (PVC), Polycarbonat (PC), glasfaserverstärkter Kunststoff (GFK), Polymethylmethacrylat (PMMA), Acrylnitril-Butadien-Styrol (ABS), Polyamid (PA) und Kombinationen davon.

Als Fasermaterial eignen sich natürliche oder synthetische Fasermaterialien, z.B. aus natürlichen Fasern aus Zellulose, Baumwolle oder Protein oder aus synthetischen Fasern aus Polyester, Homo- oder Copolymeren von Ethylen und/oder Propylen oder Viskose oder Mischungen davon. Das Fasermaterial kann z.B. ein Gewebe, Gelege oder Gewirke sein, wobei ein Filz oder Vlies bevorzugt ist.

Das Trägerelement oder die zu kaschierende Oberfläche des Trägerelements ist bevorzugt aus einem Material aus Polypropylen, Naturfaser, z.B. einer harzgebundenen Naturfaser, oder ABS. Das Polypropylen ist bevorzugt glasfaserverstärktes Polypropylen.

Bei Bedarf kann die zu kaschierende Oberfläche des Trägerelements vorbehandelt sein, z.B. durch Reinigen und/oder Auftragen eines Primers. Das Aufbringen eines Primers ist aber in der Regel nicht notwendig.

Die Heissschmelzklebstoffzusammensetzung kann auf übliche Weise auf die Folie appliziert werden. Die Heissschmelzklebstoffzusammensetzung wird z.B. durch Aufheizen verflüssigt und dann durch übliche Beschichtungsverfahren, wie z.B. Streichen oder Walzen, auf die Folie appliziert werden. Typischerweise ist die Applikationstemperatur im Bereich von 150 bis 200 °C, insbesondere 160 bis 180 °C. Bei dieser Temperatur ist der Klebstoff gut verarbeitbar. Die Viskosität der Heissschmelzklebstoffzusammensetzungen kann auf die Applikationstemperatur angepasst werden.

Nach Abkühlung wird die mit der Heissschmelzklebstoffzusammensetzung beschichtete Folie erhalten. Die Schichtdicke der Heissschmelzklebstoffschicht ist üblicherweise relativ dünn, die Auftragmenge liegt z.B. im Bereich von 50 bis 150 g/m².

Die so beschichteten Folien sind lagerstabil und können auch über Wochen gelagert werden, was für die industrielle Fertigung sehr vorteilhaft ist.

Für die eigentliche Herstellung des Verbundkörpers wird die mit der Heissschmelzklebstoffzusammensetzung beschichtete Folie zur Reaktivierung des Schmelzklebers erwärmt und dann auf das Trägerelement appliziert bzw. aufgezogen. Typischerweise liegt die Erwärmungstemperatur zur Reaktivierung im Bereich von 100 bis 200 °C, insbesondere 140 bis 180 °C. Dies kann auf jede mögliche Weise erfolgen, z.B. in einem Ofen, durch Heißluft oder IR-Bestrahlung.

Nach der Reaktivierung durch Erwärmung wird die Folie auf das Trägerelement aufgezogen bzw. aufgebracht. Das Aufziehen sollte zweckmäßigerweise möglichst bald nach der Reaktivierung erfolgen, z.B. weniger als 60 s, bevorzugt weniger als 20 s, nach der Reaktivierung, um ein zu starkes Abkühlen des Schmelzklebers zu vermeiden. Durch das Aufziehen kommt die Heissschmelzklebstoffzusammensetzung mit dem Trägerelement in Kontakt, wodurch nach Abkühlung der Klebverbund zwischen Folie und Trägerelement durch den Schmelzkleber herstellt wird.

Das Aufziehen der Folie wird gewöhnlich durch Druck mittels Pressen oder bevorzugt durch Anlegen von Vakuum unterstützt. Die Folie wird bevorzugt durch Vakuum-Tiefziehkaschierung oder IMG-Kaschierung auf das Trägerelement aufgezogen. Diese Verfahren wurden bereits vorstehend erläutert.

Die Erfindung betrifft auch den durch das beschriebene Verfahren erhältlichen Verbundkörper. Der Verbundkörper ist vorzugsweise ein Artikel der industriellen Fertigung, insbesondere ein Teil eines Fahrzeugs, bevorzugt eines Automobils.

### Beispiele

Es wurden folgende Rohstoffe für die Herstellung von Heissschmelzklebstoffen verwendet. Alle angegebenen Erweichungspunkte sind gemäß DIN EN 1238 bestimmt, außer dem für das PP-Homopolymer HE40XI, welcher als Vicat-Erweichungstemperatur bestimmt wurde.

| | | |
|---|---|---|
| Escorez^{®}1401 | KW-Harz, Erweichungspunkt 119°C | Exxon Mobil, USA |
| Regalite^{®}R 7100 | KW-Harz, Erweichungspunkt 102°C | Eastman Chemical Co., USA |
| Hikorez^{®}A-2115 | KW-Harz, Erweichungspunkt 112°C | Kolon Industries, Inc, Korea |
| Vestoplast^{®}703 | Amorphes bzw. ataktisches Poly-alpha-olefin, Erweichungspunkt 124°C | Evonik, Deutschland |
| Vestoplast^{®}792 | Amorphes bzw. ataktisches Poly-alpha-olefin, Erweichungspunkt 108°C | Evonik, Deutschland |
| Vestoplast^{®}608 | Amorphes bzw. ataktisches Poly-alpha-olefin, Erweichungspunkt 157°C | Evonik, Deutschland |
| Polypropylen Homopolymer HE40XI | Polypropylen Homopolymerisat, Erweichungspunkt 154°C | Polychim Industrie, Frankreich |
| Epolene^{®}E-43 | Maleinsäureanhydrid gepfropftes Polypropylen, Erweichungspunkt 158°C | Westlake Chemical, USA |
| Licocene^{®}PP MA 6452 | Maleinsäureanhydrid gepfropftes Polypropylen, Erweichungspunkt 143°C | Clariant, Schweiz |
| Licocene^{®}PP 6102 | Polypropylenwachs, Erweichungspunkt 145°C | Clariant, Schweiz |
| Tinopal^{®}OB | Optischer Aufheller | BASF, Deutschland |
| Irganox^{®}1010 | Antioxidationsmittel/Stabilisator | BASF, Deutschland |

Es wurden sechs Heissschmelzklebstoffzusammensetzungen (Beispiele 1 und 2 und Vergleichsbeispiele 1 bis 4) hergestellt, indem die Inhaltsstoffe gemäss den in Tabelle 1 angegebenen Gewichtsteilen miteinander bei einer Temperatur von 190°C im Vakuum in einem Rührwerk vermengt wurden.

Die hergestellten Heissschmelzklebstoffe wurden auf ihre Eigenschaften mit den nachstehend angeführten Methoden untersucht. Die Ergebnisse sind in Tabelle 2 wiedergegeben.

### Haftung auf Substraten

Es wurde untersucht, auf welchen Substraten die Heissschmelzklebstoffe haften. Die untersuchten Substrate waren aus Polypropylen (PP), Polyvinylchlorid (PVC), Polyamid (PA), Polycarbonat (PC), glasfaserverstärktem Kunststoff (GFK), Polymethylmethacrylat (PMMA). Die Tabelle führt die Substrate an, auf denen der Schmelzkleber haftete.

### Viskosität

Der Klebstoff wird in einer verschlossenen Tube für 20min bei 200°C im Wärmeschrank aufgeschmolzen. 9,7mg Klebstoff werden in eine Einweghülse abgewogen und 20min im Viskosimeter bei der Starttemperatur temperiert, die Messung der Viskosität erfolgt bei 1, 2,5, 5 und 10UpM, notiert wird der Wert, der sich nach 5min Messung einstellt, bei jeder Temperaturerhöhung wird 20min temperiert (Spindel Nr.27, Brookfield Viskosimeter).

### Offene Zeit

Die Offene Zeit ist die maximale Zeit zwischen dem Klebstoffauftrag und der Verklebung der Substrate und wird wie folgt bestimmt:
- Der Klebstoff wird in einer verschlossenen Tube für 20min bei 200°C im Wärmeschrank aufgeschmolzen
- Der Klebstoff wird auf einer 200°C heißen Heizplatte in ein 500µ Rakel gefüllt; es wird ein Klebstofffilm auf getrocknetem Silikonpapier aufgezogen (Länge ca. 30cm)
- Vorbereitung einiger Silikonpapierstreifen (100×10mm)
- Der Film wird von der Heizplatte genommen und auf einen auf Raumtemperatur (23°C) konditionierten Tisch abgelegt, die Uhr wird gestartet
- Ca. aller 5 sec wird ein Papierstreifen mit der nicht-silikonisierten Seite leicht mit dem Finger auf den Klebstoff gedrückt und langsam wieder abgezogen
- Wenn der Papierstreifen sich von dem Klebstofffilm trennen lässt, ohne das er an diesem haften bleibt oder diesen zerreißt wird die Uhr gestoppt und die verstrichene Zeit notiert.

### Anfangsfestigkeit

- Der Klebstoff wird in einer verschlossenen Tube für 20min bei 200°C im Wärmeschrank aufgeschmolzen
- Der Klebstoff wird auf eine Seite des PP-Prüfkörpers aufgetragen; durch leichten Druck wird er auf den anderen Prüfkörper gepresst, die Verklebung wird mit einem 500g Gewicht fixiert
- Als Prüfkörper für diese Messung werden PP-Prüfkörper (100mm×25mm*4mm) verwendet, die zu verklebende Fläche beträgt 25mm×25mm, Klebstoffdicke 1mm
- Gemessen wird die Anfangsfestigkeit (N/mm²) nach 3, 6, 10, 20 und 30 min
- In der Auswertung der Ergebnisse ist nur der 30min-Wert notiert.

### Shore A

Die Shore A wird nach DIN EN ISO 868 gemessen.

### Erweichungspunkt

Der Erweichungspunkt wurde nach der Ring & Kugel-Methode, DIN EN 1238, gemessen.

### Wärmestand

- Der Klebstoff wird in einer verschlossenen Tube für 20min bei 200°C im Wärmeschrank aufgeschmolzen
- Der Klebstoff wird auf eine Seite des PP-Prüfkörpers aufgetragen; durch leichten Druck wird er auf den anderen Prüfkörper gepresst, die Verklebung wird mit einem 500g Gewicht fixiert, es wird eine Dreifachbestimmung durchgeführt
- Als Prüfkörper für diese Messung werden PP-Prüfkörper (100mm×25mm*4mm) verwendet, die zu verklebende Fläche beträgt 25mmx25mm, Klebstoffdicke 1mm
- Nach 24h werden die Probekörper in einem Wärmeschrank gehängt und die Verklebung mit 1kg Gewicht belastet. Der Wärmeschrank ist auf 40°C vortemperiert. Nach jeder Stunde wird die Temperatur um 10K erhöht. Abgelesen wird die Temperatur wo die Verklebung versagt hat
- als Wärmestand wird dann die Temperatur notiert bei der die Verklebung noch intakt war (z.B. die Verklebung versagt bei 140°C, dann wird als Wärmestand 130°C angegeben)

**Tabelle 1. (alle Angaben in Gewichtsteilen)**

| | **Vgl.bsp. 1** | **Vgl.bsp. 2** | **Bsp. 1** | **Bsp. 2** | **Vgl.bsp. 3** | **Vgl.bsp. 4** |
|---|---|---|---|---|---|---|
| Escorez^{®}1401 | 15,14 | | | | | |
| Regalite^{®}R7100 | | 40,75 | | 16,27 | 16,41 | 16,22 |
| Hikorez^{®}A-2115 | | | 16,13 | | | |
| Vestoplast^{®}703 | 34,85 | | 36,88 | 37,96 | 38,29 | 36,76 |
| Vestoplast^{®}792 | 34,85 | 32,00 | 37,31 | 40,13 | 42,67 | 37,84 |
| Vestoplast^{®}608 | | 27,00 | | | | |
| Polypropylen Homopolymer HE40XI | 5,77 | | | | | |
| Epolene^{®}E-43 | 9,13 | | | | | |
| Licocene^{®}PP MA 6452 | | | 9,46 | 5,42 | 2,41 | |
| Licocene^{®}PP 6102 | | | | | | 8,97 |
| Tinopal^{®}OB | 0,02 | | | | | |
| Irganox^{®}1010 | 0,24 | 0,25 | 0,22 | 0,22 | 0,22 | 0,22 |
| | 100,00 | 100,00 | 100,00 | 100,00 | 100,00 | 100,01 |

**Tabelle 2.**

| | **Vgl.bsp. 1** | **Vgl.bsp. 2** | **Bsp. 1** | **Bsp. 2** | **Vgl.bsp. 3** | **Vgl.bsp. 4** |
|---|---|---|---|---|---|---|
| Haftung auf Substrat | PP, PVC, PA, PMMA | PP | PP, PVC, PA, PC, GFK, PMMA | PP, PVC, PC, GFK, PMMA | PP | PP |
| Viskosität @ 180 °C [mPa*s] | 29500 | 15000 | 15000 | 17500 | 21500 | 13000 |
| Offene Zeit, 500µm bei 200°C [Sek.] | 25 | 30 | 30 | 40 | 40 | 35 |
| Anfangsfestigkeit [N/mm²] | 2,5 | 0,6 | 2,0 | 1,5 | 1,3 | 1,8 |
| Shore A | 80 | 52 | 80 | 75 | 73 | 78 |
| Erweichungspunkt (Ring Ball) [°C] | 157 | 130 | 130 | 124 | 127 | 127 |
| Wärmestand PP-PP [°C] | 110 | 60 | 100 | 90 | 90 | 100 |

### Haftung auf ABS

Die Haftung der Schmelzklebstoffe auf ABS-Substraten wurde untersucht, wobei eine mit dem Schmelzkleber beschichtete TPO-Folie bei verschiedenen Kaschiertemperaturen (140°C und 200°C) auf ein ABS-Substrat kaschiert wurde. Die Versuche bei 200°C dienten der Prüfung, eine Kaschiertemperatur von 200°C ist aber in der Praxis zu hoch und nicht prozesstauglich. Die hergestellten Verbundkörper wurden 24 Stunden nach Herstellung optisch und mittels eines händischen Schälversuchs bewertet. Die Ergebnisse sind in Tabelle 3 gezeigt.

**Tabelle 3. Haftung auf ABS**

| **kaschiert** @ | **Vgl.bsp.** 1 | **Vgl.bsp.** 2 | Bsp. 1 | Bsp. 2 | **Vgl.bsp. 3** | **Vgl.bsp.** 4 |
|---|---|---|---|---|---|---|
| 140 °C | adhäsives Versagen zum ABS | gute Haftung, Schaumausriss TPO Folie | gute Haftung, Schaumausriss TPO Folie | gute Haftung, Schaumausriss TPO Folie | schlechte Haftung auf ABS | schlechte Haftung auf ABS |
| 200 °C | gute Haftung, Schaumausriss TPO Folie | gute Haftung, Schaumausriss TPO Folie | gute Haftung, Schaumausriss TPO Folie | gute Haftung, Schaumausriss TPO Folie | schlechte Haftung auf ABS | schlechte Haftung auf ABS |

### Bewertung des Reaktivierungsverhaltens von vorbeschichteten TPO-Folien

Für das Beispiel 1 und Vergleichsbeispiel 1 wurde ein Kaschierprozess mit verschiedenen Wartezeiten zwischen Reaktivierung und Verpressen simuliert. Die Bewertung erfolgte optisch und mittels händischen Schälversuchs. Folgende Materialien wurden verwendet:

| | |
|---|---|
| Folie | TPO-Folie ohne Primer |
| Substrat | Polypropylen (PP GF 30: PP mit 30% Glasfaser) |
| Schmelzkleber | Beispiel 1 und Vergleichsbeispiel 1 |

### Herstellung der Verbundkörper

Der Klebstoff wurde mit jeweils 80 g/m² auf die TPO-Folie mit 200°C bei Vergleichsbeispiel 1 bzw. mit 170°C bei Beispiel 1 appliziert. Nach Abkühlung wurde die mit Klebstoff beschichtete Folie erhalten. Die Reaktivierung des applizierten Klebstoffs erfolgte mittels IR. Nach einer Wartezeit x wurde die reaktivierte TPO-Folie auf PP aufgelegt und mittels einer 5 kg Rolle angerollt. Nach Abkühlen (ca. 5-10 min) erfolgte der Schältest. Die Ergebnisse für den Versuch mit dem Schmelzkleber von Beispiel 1 sind in Tabelle 4 und die Ergebnisse für den Versuch mit dem Schmelzkleber von Vergleichsbeispiel 1 sind in Tabelle 5 gezeigt.

Bewertung:
i.O. in Ordnung = Schaumausriss Folie
n.i.O. nicht in Ordnung = adhesives Versagen zum PP

**Tabelle 4. Verbundkörper mit Schmelzkleber von Beispiel 1**

| | Wartezeit nach Reaktivierung für Verpressung | | | | | |
|---|---|---|---|---|---|---|
| Reaktivierungs temperatur | sofort | 6s | 10s | 12 s | 15s | 20 s |
| 170°C | i.O. | i.O. | i.O. | i.O. | i.O. | i.O. |
| 160°C | i.O. | i.O. | i.O. | i.O. | i.O. | i.O. |
| 150°C | i.O. | i.O. | i.O. | i.O. | i.O. | i.O. |
| 140°C | i.O. | i.O. | i.O.* | i.O.* | n.i.O. | n.i.O. |

| | | | | | | |
|---|---|---|---|---|---|---|
| * teilweise Schaumausriss Folie + adhesives Versagen zum PP | | | | | | |

**Tabelle 5. Verbundkörper mit Schmelzkleber von Vergleichsbeispiel 1**

| | Wartezeit nach Reaktivierung für Verpressung | | | | | |
|---|---|---|---|---|---|---|
| Reaktivierungs temperatur | sofort | 6s | 10s | 12 s | 15s | 20 s |
| 200°C | i.O. | i.O. | i.O. | i.O. | i.O. | n.i.O. |
| 190°C | i.O. | i.O. | i.O.* | i.O.* | i.O.* | n.i.O. |
| 180°C | i.O. | i.O. | i.O.* | i.O.* | n.i.O. | n.i.O. |
| 170°C | i.O. | i.O.* | n.i.O. | n.i.O. | n.i.O. | n.i.O. |

| | | | | | | |
|---|---|---|---|---|---|---|
| * teilweise Schaumausriss Folie + adhesives Versagen zum PP | | | | | | |

## Patentansprüche

1. Heissschmelzklebstoffzusammensetzung umfassend
a) mindestens ein bei 25°C festes ataktisches Poly-α-olefin (APAO);
b) mindestens ein Kohlenwasserstoffharz mit einem Erweichungspunkt von mindestens 80°C, gemessen nach der Ring & Kugel-Methode gemäss DIN EN 1238; und
c) mindestens ein Maleinsäureanhydrid-gepfropftes Wachs mit einem Erweichungspunkt von nicht mehr als 150°C, gemessen nach der Ring & Kugel-Methode gemäss DIN EN 1238, welches ein Maleinsäureanhydrid-gepfropftes Polypropylen-Wachs oder ein Maleinsäureanhydrid-gepfropftes Polyethylen-Wachs ist,
wobei der Anteil an dem mindestens einen Maleinsäureanhydrid-gepfropften Wachs in der Heissschmelzklebstoffzusammensetzung mindestens 3 Gew.-% beträgt und wobei der Anteil an dem mindestens einen Kohlenwasserstoffharz 10 bis 20 Gew.-% beträgt.

2. Heissschmelzklebstoffzusammensetzung nach Anspruch 1, **dadurch gekennzeichnet, dass** das ataktische Poly-α-olefin (APAO) einen Erweichungspunkt im Bereich von 70°C bis 170°C, gemessen nach der Ring & Kugel-Methode gemäss DIN EN 1238, aufweist.

3. Heissschmelzklebstoffzusammensetzung nach Anspruch 1 oder 2, **dadurch gekennzeichnet, dass** das ataktische Poly-α-olefin (APAO) einen Erweichungspunkt im Bereich von 80°C bis 150°C und insbesondere von 90°C bis 140°C, gemessen nach der Ring & Kugel-Methode gemäss DIN EN 1238, aufweist.

4. Heissschmelzklebstoffzusammensetzung nach irgendeinem der vorhergehenden Ansprüche, **dadurch gekennzeichnet, dass** das Maleinsäureanhydrid-gepfropfte Wachs einen Erweichungspunkt im Bereich von 100°C bis 150°C, bevorzugt von 120°C bis 150°C, aufweist.

5. Heissschmelzklebstoffzusammensetzung nach irgendeinem der vorhergehenden Ansprüche, **dadurch gekennzeichnet, dass** das Kohlenwasserstoffharz ein aliphatisches C5-C9-Kohlenwasserstoffharz ist.

6. Heissschmelzklebstoffzusammensetzung nach irgendeinem der vorhergehenden Ansprüche, **dadurch gekennzeichnet, dass** sie
a) 40 bis 85 Gew.-%, bevorzugt 60 bis 80 Gew.-%, von dem mindestens einen ataktischen Poly-α-olefin (APAO); und/oder
b) 10 bis 20 Gew.-%, von dem mindestens einen Kohlenwasserstoffharz; und/oder
c) 3 bis 20 Gew.-%, bevorzugt 5 bis 15 Gew.-%, von dem mindestens einen Maleinsäureanhydrid-gepfropften Wachs
umfasst.

7. Heissschmelzklebstoffzusammensetzung nach irgendeinem der vorhergehenden Ansprüche, **dadurch gekennzeichnet, dass** sie 7 bis 13 Gew.-% von dem mindestens einen Maleinsäureanhydrid-gepfropften Wachs umfasst.

8. Heissschmelzklebstoffzusammensetzung nach irgendeinem der vorhergehenden Ansprüche, **dadurch gekennzeichnet, dass** sie einen Erweichungspunkt im Bereich von 100 bis 160°C, bevorzugt 110 bis 140°C, gemessen nach der Ring & Kugel-Methode gemäss DIN EN 1238, aufweist.

9. Heissschmelzklebstoffzusammensetzung nach irgendeinem der vorhergehenden Ansprüche, **dadurch gekennzeichnet, dass** das Kohlenwasserstoffharz einen Erweichungspunkt von mindestens 90°C, bevorzugt mindestens 100°C, gemessen nach der Ring & Kugel-Methode gemäss DIN EN 1238, aufweist.

10. Heissschmelzklebstoffzusammensetzung nach irgendeinem der vorhergehenden Ansprüche, **dadurch gekennzeichnet, dass** der Anteil an weiteren thermoplastischen Polymeren, die sich von a) dem ataktischen Poly-α-olefin (APAO), b) dem Kohlenwasserstoffharz und c) dem Maleinsäureanhydrid-gepfropften Wachs unterscheiden, in der Heissschmelzklebstoffzusammensetzung weniger als 5 Gew.-%, bevorzugt weniger als 2 Gew.-%, beträgt oder die Heissschmelzklebstoffzusammensetzung im Wesentlichen keine weiteren thermoplastischen Polymere enthält.

11. Heissschmelzklebstoffzusammensetzung nach irgendeinem der Ansprüche 1 bis 10, **dadurch gekennzeichnet, dass** sie ein nichtreaktiver Polyolefin-Heissschmelzklebstoff ist.

12. Verwendung einer Heissschmelzklebstoffzusammensetzung zur Folienkaschierung, insbesondere durch Vakuum-Tiefziehkaschierung oder IMG-Kaschierung, wobei es sich um eine Heissschmelzklebstoffzusammensetzung umfassend
a) mindestens ein bei 25°C festes ataktisches Poly-α-olefin (APAO);
b) mindestens ein Kohlenwasserstoffharz mit einem Erweichungspunkt von mindestens 80°C, gemessen nach der Ring & Kugel-Methode gemäss DIN EN 1238; und
c) mindestens ein Maleinsäureanhydrid-gepfropftes Wachs mit einem Erweichungspunkt von nicht mehr als 150°C, gemessen nach der Ring & Kugel-Methode gemäss DIN EN 1238, welches ein Maleinsäureanhydrid-gepfropftes Polypropylen-Wachs oder ein Maleinsäureanhydrid-gepfropftes Polyethylen-Wachs ist,
wobei der Anteil an dem mindestens einen Maleinsäureanhydrid-gepfropften Wachs in der Heissschmelzklebstoffzusammensetzung mindestens 3 Gew.-% beträgt, handelt.

13. Herwendung nach Anspruch 12 für den Fahrzeugbau, insbesondere für den Automobilbau.

14. Verfahren zur Herstellung eines Verbundkörpers aus einem Trägerelement und einer Folie durch Verkleben, wobei das Verfahren folgende Schritte umfasst
a) das Applizieren einer Heissschmelzklebstoffzusammensetzung auf eine Seite einer Folie, vorzugsweise einer Polyolefin-Folie;
b) das Erwärmen der mit der Heissschmelzklebstoffzusammensetzung beschichteten Folie zur Reaktivierung, und
das Aufziehen der reaktivierten, mit der Heissschmelzklebstoffzusammensetzung beschichteten Folie auf das Trägerelement, wobei die Heissschmelzklebstoffzusammensetzung mit dem Trägerelement in Kontakt kommt und nach Abkühlung den Klebverbund herstellt, wobei es sich um eine Heissschmelzklebstoffzusammensetzung umfassend
a) mindestens ein bei 25°C festes ataktisches Poly-α-olefin (APAO);
b) mindestens ein Kohlenwasserstoffharz mit einem Erweichungspunkt von mindestens 80°C, gemessen nach der Ring & Kugel-Methode gemäss DIN EN 1238; und
c) mindestens ein Maleinsäureanhydrid-gepfropftes Wachs mit einem Erweichungspunkt von nicht mehr als 150°C, gemessen nach der Ring & Kugel-Methode gemäss DIN EN 1238, welches ein Maleinsäureanhydrid-gepfropftes Polypropylen-Wachs oder ein Maleinsäureanhydrid-gepfropftes Polyethylen-Wachs ist,
wobei der Anteil an dem mindestens einen Maleinsäureanhydrid-gepfropften Wachs in der Heissschmelzklebstoffzusammensetzung mindestens 3 Gew.-% beträgt, handelt.

15. Verfahren nach Anspruch 14, wobei die Folie eine TPO-Folie ist und/oder das Trägerelement oder die zu kaschierende Oberfläche des Trägerelements aus einem Polypropylen-, Naturfaser- oder ABS-Material ist und/oder die Folie durch Vakuum-Tiefziehkaschierung oder IMG-Kaschierung auf das Trägerelement aufgezogen wird.

16. Verbundkörper, erhältlich durch ein Verfahren nach Anspruch 14 oder Anspruch 15.

## Claims

1. Hotmelt adhesive composition comprising
a) at least one atactic poly-α-olefin (APAO) which is solid at 25°C;
b) at least one hydrocarbon resin having a softening point of at least 80°C, measured by the ring & ball method according to DIN EN 1238; and
c) at least one maleic anhydride-grafted wax having a softening point of not more than 150°C, measured by the ring & ball method according to DIN EN 1238, which is a maleic anhydride-grafted polypropylene wax or a maleic anhydride-grafted polyethylene wax,
where the fraction of the at least one maleic anhydride-grafted wax in the hotmelt adhesive composition is at least 3 wt% and the fraction of the at least one hydrocarbon resin is 10 to 20 wt%.

2. Hotmelt adhesive composition according to Claim 1, **characterized in that** the atactic poly-α-olefin (APAO) has a softening point in the range from 70°C to 170°C, measured by the ring & ball method according to DIN EN 1238.

3. Hotmelt adhesive composition according to Claim 1 or 2, **characterized in that** the atactic poly-α-olefin (APAO) has a softening point in the range from 80°C to 150°C and more particularly from 90°C to 140°C, measured by the ring & ball method according to DIN EN 1238.

4. Hotmelt adhesive composition according to any of the preceding claims, **characterized in that** the maleic anhydride-grafted wax has a softening point in the range from 100°C to 150°C, preferably from 120°C to 150°C.

5. Hotmelt adhesive composition according to any of the preceding claims, **characterized in that** the hydrocarbon resin is an aliphatic C5-C9 hydrocarbon resin.

6. Hotmelt adhesive composition according to any of the preceding claims, **characterized in that** it comprises
a) 40 to 85 wt%, preferably 60 to 80 wt%, of the at least one atactic poly-α-olefin (APAO); and/or
b) 10 to 20 wt% of the at least one hydrocarbon resin; and/or
c) 3 to 20 wt%, preferably 5 to 15 wt%, of the at least one maleic anhydride-grafted wax.

7. Hotmelt adhesive composition according to any of the preceding claims, **characterized in that** it comprises 7 to 13 wt% of the at least one maleic anhydride-grafted wax.

8. Hotmelt adhesive composition according to any of the preceding claims, **characterized in that** it has a softening point in the range from 100 to 160°C, preferably 110 to 140°C, measured by the ring & ball method according to DIN EN 1238.

9. Hotmelt adhesive composition according to any of the preceding claims, **characterized in that** the hydrocarbon resin has a softening point of at least 90°C, preferably at least 100°C, measured by the ring & ball method according to DIN EN 1238.

10. Hotmelt adhesive composition according to any of the preceding claims, **characterized in that** the fraction of further thermoplastic polymers which differ from a) the atactic poly-α-olefin (APAO), b) the hydrocarbon resin, and c) the maleic anhydride-grafted wax in the hotmelt adhesive composition is less than 5 wt%, preferably less than 2 wt%, or the hotmelt adhesive composition contains substantially no further thermoplastic polymers.

11. Hotmelt adhesive composition according to any of Claims 1 to 10, **characterized in that** it is a nonreactive polyolefin hotmelt adhesive.

12. Use of a hotmelt adhesive composition for foil lamination, in particular by vacuum forming lamination or IMG lamination, wherein said hotmelt adhesive composition comprises
a) at least one atactic poly-α-olefin (APAO) which is solid at 25°C;
b) at least one hydrocarbon resin having a softening point of at least 80°C, measured by the ring & ball method according to DIN EN 1238; and
c) at least one maleic anhydride-grafted wax having a softening point of not more than 150°C, measured by the ring & ball method according to DIN EN 1238, which is a maleic anhydride-grafted polypropylene wax or a maleic anhydride-grafted polyethylene wax,
where the fraction of the at least one maleic anhydride-grafted wax in the hotmelt adhesive composition is at least 3 wt%.

13. Use according to Claim 12 for vehicle construction, more particularly for automobile construction.

14. Method for producing an assembly composed of a substrate element and a foil by adhesive bonding, said method comprising the following steps:
a) the applying of a hotmelt adhesive composition to one side of a foil, preferably a polyolefin foil;
b) the heating of the foil coated with the hotmelt adhesive composition, for reactivating, and
c) the drawing of the reactivated foil, coated with the hotmelt adhesive composition, onto the substrate element, with the hotmelt adhesive composition coming into contact with the substrate element and, after cooling, producing the bonded assembly, wherein said hotmelt adhesive composition comprises
a) at least one atactic poly-α-olefin (APAO) which is solid at 25°C;
b) at least one hydrocarbon resin having a softening point of at least 80°C, measured by the ring & ball method according to DIN EN 1238; and
c) at least one maleic anhydride-grafted wax having a softening point of not more than 150°C, measured by the ring & ball method according to DIN EN 1238, which is a maleic anhydride-grafted polypropylene wax or a maleic anhydride-grafted polyethylene wax,
where the fraction of the at least one maleic anhydride-grafted wax in the hotmelt adhesive composition is at least 3 wt%.

15. Method according to Claim 14, wherein the foil is a TPO foil and/or the substrate element, or the surface of the substrate element to be laminated, is made of a polypropylene, natural-fiber or ABS material, and/or the film is drawn onto the substrate element by vacuum forming lamination or IMG lamination.

16. Assembly obtainable by a method according to Claim 14 or Claim 15.

## Revendications

1. Composition d'adhésif thermofusible comprenant
a) au moins une poly-α-oléfine atactique (APAO) solide à 25 °C ;
b) au moins une résine d'hydrocarbure dotée d'un point de ramollissement d'au moins 80 °C, mesuré selon la méthode à anneau & billes selon la norme DIN EN 1238 ; et
c) au moins une cire greffée avec de l'anhydride d'acide maléique dotée d'un point de ramollissement non supérieur à 150 °C, mesuré selon la méthode à anneau & billes selon la norme DIN EN 1238 qui est une résine de polypropylène greffée avec de l'anhydride d'acide maléique ou une résine de polyéthylène greffée avec de l'anhydride d'acide maléique,
la proportion de l'au moins une cire greffée avec de l'anhydride d'acide maléique dans la composition d'adhésif thermofusible étant d'au moins 3 % en poids et la proportion de l'au moins une résine d'hydrocarbure étant de 10 à 20 % en poids.

2. Composition d'adhésif thermofusible selon la revendication 1, **caractérisée en ce que** la poly-α-oléfine atactique (APAO) présente un point de ramollissement dans la plage de 70 °C à 170 °C, mesuré selon la méthode à anneau & billes selon la norme DIN EN 1238.

3. Composition d'adhésif thermofusible selon la revendication 1 ou 2, **caractérisée en ce que** la poly-α-oléfine atactique (APAO) présente un point de ramollissement dans la plage de 80 °C à 150 °C et en particulier de 90 °C à 140 °C, mesuré selon la méthode à anneau & billes selon la norme DIN EN 1238.

4. Composition d'adhésif thermofusible selon l'une quelconque des revendications précédentes, **caractérisée en ce que** la cire greffée avec de l'anhydride d'acide maléique présente un point de ramollissement dans la plage de 100 °C à 150 °C, préférablement de 120 °C à 150 °C.

5. Composition d'adhésif thermofusible selon l'une quelconque des revendications précédentes, **caractérisée en ce que** la résine d'hydrocarbure est une résine d'hydrocarbure aliphatique en C5 à C9.

6. Composition d'adhésif thermofusible selon l'une quelconque des revendications précédentes, **caractérisée en ce qu'**elle comprend
a) 40 à 85 % en poids, préférablement 60 à 80 % en poids, de l'au moins une poly-α-oléfine atactique (APAO) ; et/ou
b) 10 à 20 % en poids, de l'au moins une résine d'hydrocarbure ; et/ou
c) 3 à 20 % en poids, préférablement 5 à 15 % en poids, de l'au moins une cire greffée avec de l'anhydride d'acide maléique.

7. Composition d'adhésif thermofusible selon l'une quelconque des revendications précédentes, **caractérisée en ce qu'**elle comprend 7 à 13 % en poids de l'au moins une cire greffée avec de l'anhydride d'acide maléique.

8. Composition d'adhésif thermofusible selon l'une quelconque des revendications précédentes, **caractérisée en ce qu'**elle présente un point de ramollissement dans la plage de 100 à 160 °C, préférablement de 110 à 140 °C, mesuré selon la méthode à anneau & billes selon la norme DIN EN 1238.

9. Composition d'adhésif thermofusible selon l'une quelconque des revendications précédentes, **caractérisée en ce que** la résine d'hydrocarbure présente un point de ramollissement d'au moins 90 °C, préférablement d'au moins 100 °C, mesuré selon la méthode à anneau & billes selon la norme DIN EN 1238.

10. Composition d'adhésif thermofusible selon l'une quelconque des revendications précédentes, **caractérisée en ce que** la proportion de polymères thermoplastiques supplémentaires, qui diffèrent a) de la poly-α-oléfine atactique (APAO), b) de la résine d'hydrocarbure et c) de la cire greffée avec de l'anhydride d'acide maléique, dans la composition d'adhésif thermofusible est inférieure à 5 % en poids, préférablement inférieure à 2 % en poids, ou la composition d'adhésif thermofusible ne contenant essentiellement aucun polymère thermoplastique supplémentaire.

11. Composition d'adhésif thermofusible selon l'une quelconque des revendications 1 à 10, **caractérisée en ce qu'**elle est un adhésif thermofusible de polyoléfine non réactif.

12. Utilisation d'une composition d'adhésif thermofusible pour le contrecollage de feuilles, en particulier pour le contrecollage par emboutissage sous vide ou le contrecollage IMG, dans laquelle il s'agit d'une composition d'adhésif thermofusible comprenant
a) au moins une poly-α-oléfine atactique (APAO) solide à 25 °C ;
b) au moins une résine d'hydrocarbure dotée d'un point de ramollissement d'au moins 80 °C, mesuré selon la méthode à anneau & billes selon la norme DIN EN 1238 ; et
c) au moins une cire greffée avec de l'anhydride d'acide maléique dotée d'un point de ramollissement non supérieur à 150 °C, mesuré selon la méthode à anneau & billes selon la norme DIN EN 1238 qui est une résine de polypropylène greffée avec de l'anhydride d'acide maléique ou une résine de polyéthylène greffée avec de l'anhydride d'acide maléique,
la proportion de l'au moins une cire greffée avec de l'anhydride d'acide maléique dans la composition d'adhésif thermofusible étant d'au moins 3 % en poids.

13. Utilisation selon la revendication 12 pour la construction de véhicule, en particulier pour la construction automobile.

14. Procédé pour la préparation d'un corps composite composé d'un élément de support et d'une feuille par collage, le procédé comprenant les étapes suivantes
a) l'application d'une composition d'adhésif thermofusible sur un côté d'une feuille, de préférence une feuille de polyoléfine ;
b) le chauffage de la feuille revêtue avec la composition d'adhésif thermofusible pour réactivation, et
c) le montage de la feuille réactivée, revêtue avec la composition d'adhésif thermofusible sur l'élément de support, la composition d'adhésif thermofusible entrant en contact avec l'élément de support et, après refroidissement, préparant le composite collé, dans lequel il s'agit d'une composition d'adhésif thermofusible comprenant
a) au moins une poly-α-oléfine atactique (APAO) solide à 25 °C ;
b) au moins une résine d'hydrocarbure dotée d'un point de ramollissement d'au moins 80 °C, mesuré selon la méthode à anneau & billes selon la norme DIN EN 1238 ; et
c) au moins une cire greffée avec de l'anhydride d'acide maléique dotée d'un point de ramollissement non supérieur à 150 °C, mesuré selon la méthode à anneau & billes selon la norme DIN EN 1238 qui est une résine de polypropylène greffée avec de l'anhydride d'acide maléique ou une résine de polyéthylène greffée avec de l'anhydride d'acide maléique,
la proportion de l'au moins une cire greffée avec de l'anhydride d'acide maléique dans la composition d'adhésif thermofusible étant d'au moins 3 % en poids.

15. Procédé selon la revendication 14, la feuille étant une feuille TPO et/ou l'élément de support ou la surface devant être contrecollée de l'élément de support étant composé(e) d'un matériau de polypropylène, de fibres naturelles ou d'ABS et/ou la feuille étant montée par contrecollage par emboutissage sous vide ou par contrecollage IMG sur l'élément de support.

16. Corps composite, qui peut être obtenu par un procédé selon la revendication 14 ou la revendication 15.
